# EUROPÄISCHE PATENTSCHRIFT

(11) **EP 3 230 111 B1**
(45) Veröffentlichungstag und Bekanntmachung des Hinweises auf die Patenterteilung: **05.12.2018**
(21) Anmeldenummer: 15807663.8
(22) Anmeldetag: 09.12.2015
(51) Int. Cl.: B60K 35/00, B60R 11/00, G02B 27/01, B60R 1/00

(54) **ANZEIGEVORRICHTUNG FÜR EIN KRAFTFAHRZEUG MIT KRAFTSENSOR, KRAFTFAHRZEUG SOWIE VERFAHREN**
DISPLAY DEVICE FOR A MOTOR VEHICLE, HAVING A FORCE SENSOR; A MOTOR VEHICLE; AND A METHOD
DISPOSITIF D'AFFICHAGE POUR VÉHICULE AUTOMOBILE COMPRENANT UN CAPTEUR DE FORCE, VÉHICULE AUTOMOBILE ET PROCÉDÉ

(30) Priorität: 11.12.2014 DE 102014118380
(43) Veröffentlichungstag der Anmeldung: 18.10.2017
(73) Patentinhaber: Valeo Comfort and Driving Assistance, 94046 Créteil Cedex (FR)
(72) Erfinder: KUNTZE, Daniel, 74321 Bietigheim-Bissingen (DE); SCHOCH, Lars, 74321 Bietigheim-Bissingen (DE); SIMONIS, Karl, 74321 Bietigheim-Bissingen (DE)
(86) Internationale Anmeldenummer: PCT/EP2015/079086
(87) Internationale Veröffentlichungsnummer: WO 2016/091931

(56) Entgegenhaltungen:
- DE-A1- 3 137 351
- DE-A1-102005 048 192
- JP-A- H1 191 403
- US-A1- 2009 008 344
- US-A1- 2014 320 382

## Beschreibung

Die vorliegende Erfindung betrifft eine Anzeigevorrichtung für ein Kraftfahrzeug mit einer Spiegeleinrichtung, welche ein Anzeigeelement mit einer semitransparenten Spiegelfläche aufweist, und mit einer Antriebseinrichtung, mittels welcher die Spiegeleinrichtung zwischen einer Verstaustellung und einer Gebrauchsstellung bewegbar ist. Die Erfindung betrifft außerdem ein Kraftfahrzeug mit einer solchen Anzeigevorrichtung. Schließlich betrifft die vorliegende Erfindung ein Verfahren zum Betreiben einer Anzeigevorrichtung für ein Kraftfahrzeug.

Das Interesse richtet sich vorliegend auf Anzeigevorrichtungen für Kraftfahrzeuge, die als Kopf-oben-Anzeigevorrichtungen beziehungsweise als Head-up Displays ausgebildet sind. Eine derartige Anzeigevorrichtung umfasst üblicherweise eine Bilderzeugungseinrichtung, mit der Licht abgestrahlt werden kann. Ferner umfasst die Anzeigevorrichtung eine Optikeinrichtung, welche beispielsweise einen oder mehrere Spiegel umfassen kann. Mit der Optikeinrichtung kann das von der Bilderzeugungseinrichtung abgestrahlte Licht auf ein Anzeigeelement projiziert werden. Das Anzeigeelement weist eine semitransparente Spiegelfläche auf. Diese semitransparente Spiegelfläche kann beispielsweise durch einen Bereich der Windschutzscheibe des Kraftfahrzeugs bereitgestellt werden. Ferner sind Anzeigevorrichtungen bekannt, die ein separates Anzeigeelement aufweisen. Solche Anzeigeelemente können auch als Combiner, Combinerspiegel oder Combinerscheibe bezeichnet werden. Durch eine Überlagerung der auf das Anzeigeelement projizierten Information, welche von diesem reflektiert wird, mit einer durch das Anzeigeelement hindurch scheinenden Information aus einer hinter dem Anzeigeelement gelegenen Umgebung kann somit ein virtuelles Bild beziehungsweise eine virtuelle Anzeige bereitgestellt werden.

Bei den Anzeigevorrichtungen, welche ein separates Anzeigeelement beziehungsweise einen Combinerspiegel aufweisen, ist üblicherweise eine Antriebseinrichtung vorgesehen, mittels welcher das Anzeigeelement zwischen einer Verstaustellung und einer Gebrauchsstellung bewegt werden kann. In der Verstaustellung kann das Anzeigeelement beispielsweise innerhalb eines Gehäuses der Anzeigevorrichtung angeordnet sein. In der Gebrauchsstellung kann das Anzeigeelement zumindest bereichsweise außerhalb des Gehäuses angeordnet sein. Bei Anzeigevorrichtungen, welche ein separates Anzeigeelement beziehungsweise einen Combinerspiegel aufweisen, muss dafür gesorgt werden, dass eine fehlerhafte Betätigung detektiert wird, damit eine Zerstörung des Anzeigeelements und der Antriebseinrichtung beziehungsweise der dahinterliegenden Kinematik verhindert werden.

Hierzu beschreibt die US 7,978,414 B2 ein Positionierungssystem für einen Combiner eines Head-up Displays. Das Positionierungssystem ist an einem Rahmen angeordnet, welcher eine Basisplatte aufweist. Ferner ist ein beweglicher Träger zum Halten des Combiners innerhalb des Rahmens vorgesehen. Der Träger ist zwischen einem ersten Ende des Rahmens, an welchem der Combiner in einer Verstaustellung angeordnet ist, und einem zweiten Ende des Rahmens, an welchem der Combiner in einer vollständig ausgefahrenen Position angeordnet ist, bewegbar.

Darüber hinaus beschreibt die EP 2 479 598 A1 ein Positionierungssystem für ein Head-up Display, welches einen Träger umfasst, der zwischen einer Verstaustellung oder einer Gebrauchsstellung mittels eines Bewegungsmechanismus bewegbar ist. Ferner ist ein Combiner auf dem Träger angeordnet. Mit Hilfe eines Winkelverstellmechanismus kann ein Neigungswinkel des Combiners eingestellt werden. Mit einem Antriebsmechanismus kann wahlweise die Bewegung des Combiners oder der Neigungswinkel des Combiners eingestellt werden.

Die JP H11 91403 A zeigt eine Anzeigevorrichtung mit den Merkmalen des Oberbegriffs des Anspruchs 1.

Es ist Aufgabe der vorliegenden Erfindung, eine Lösung aufzuzeigen, wie eine Anzeigevorrichtung der eingangs genannten Art, insbesondere eine Kopf-oben-Anzeigevorrichtung, zuverlässiger betrieben werden kann.

Diese Aufgabe wird erfindungsgemäß durch eine Anzeigevorrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Anzeigevorrichtung für ein Kraftfahrzeug umfasst eine Spiegeleinrichtung, welche ein Anzeigeelement mit einer semitransparenten Spiegelfläche aufweist. Darüber hinaus umfasst die Anzeigevorrichtung eine Antriebseinrichtung, mittels welcher die Spiegeleinrichtung zwischen einer Verstaustellung und einer Gebrauchsstellung bewegbar ist. Zudem weist die Spiegeleinrichtung eine Sensoreinrichtung auf, welche dazu ausgelegt ist, in der Gebrauchsstellung der Spiegeleinrichtung eine auf das Anzeigeelement ausgeübte Kraft zu erfassen.

Anzeigevorrichtung ist insbesondere als sogenannte Kopf-oben-Anzeigevorrichtung beziehungsweise als Head-up Display ausgebildet. Die Anzeigevorrichtung kann eine Bilderzeugungseinrichtung aufweisen, mit der Licht abgestrahlt werden kann. Insbesondere kann mit der Bilderzeugungseinrichtung ein Bild bereitgestellt werden. Das von der Bilderzeugungseinrichtung abgestrahlte Licht kann mithilfe einer Optikeinrichtung auf das Anzeigeelement der Spiegeleinrichtung projiziert werden. Das Anzeigeelement weist eine semitransparente Spiegelfläche auf. Das Anzeigeelement kann beispielsweise aus Glas oder aus einem Kunststoff gefertigt sein. Das Anzeigeelement kann auch als Combinerspiegel, Combinerscheibe oder als Combiner bezeichnet werden. Somit wird das Licht, welches auf das Anzeigeelement projiziert wird zu den Augen eines Fahrers des Kraftfahrzeugs reflektiert. Zudem gelangt zu den Augen des Fahrers das Licht, welches von einem Umgebungsbereich hinter dem Anzeigeelement durch das Anzeigeelement hindurch zu dem Fahrer scheint. Durch die Überlagerung des Lichts, welches von dem Anzeigeelement reflektiert wird, und dem Licht, welches durch das Anzeigeelement hindurch scheint, wird dem Fahrer ein virtuelles Bild beziehungsweise eine virtuelle Anzeige bereitgestellt.

Die Anzeigevorrichtung weist die Spiegeleinrichtung auf, welche wiederum das Anzeigeelement umfasst. Ferner ist eine Antriebseinrichtung vorgesehen, mittels welcher die Spiegeleinrichtung zwischen einer Verstaustellung und einer Gebrauchsstellung und umgekehrt bewegt werden kann. Die Antriebseinrichtung kann beispielsweise einen entsprechenden Stellmotor umfassen. In der Gebrauchsstellung befindet sich die Spiegeleinrichtung innerhalb des Gehäuses der Anzeigevorrichtung. In der Gebrauchsstellung kann die Spiegeleinrichtung mithilfe der Antriebseinrichtung aus dem Gehäuse heraus bewegt werden, sodass das Anzeigeelement in der Gebrauchsstellung zumindest bereichsweise außerhalb des Gehäuses angeordnet ist.

Die Spiegeleinrichtung weist zudem eine Sensoreinrichtung auf, mittels welcher eine auf das Anzeigeelement ausgeübte Kraft erfasst werden kann. Die Sensoreinrichtung ist dazu ausgelegt, die auf das Anzeigeelement ausgeübte Kraft zu erfassen, Während sich die Spiegeleinrichtung in der Gebrauchsstellung befindet. Mit der Sensoreinrichtung kann insbesondere erfasst werden, ob auf das Anzeigeelement ein Zug oder ein Druck ausgeübt wird. Insbesondere kann die Sensoreinrichtung dazu ausgelegt sein, Kräfte, die aus unterschiedlichen Raumrichtungen auf das Anzeigeelement wirken, zu erfassen. So kann beispielsweise eine Kraft, die von oben auf das Anzeigeelement ausgeübt wird erfasst werden. Ferner können Kräfte die von vorne oder von hinten auf das Anzeigeelement ausgeübt werden, mittels der Sensoreinrichtung erfasst werden. Somit kann eine Fehlbedienung der Anzeigevorrichtung zuverlässig erkannt werden.

Weiterhin ist es vorteilhaft, wenn die Sensoreinrichtung dazu ausgelegt ist, ein Steuersignal auszugeben, falls die erfasste Kraft einen vorbestimmten Schwellenwert überschreitet. Die Sensoreinrichtung kann beispielsweise ein Speicherelement aufweisen, dem ein Schwellenwert für die Kraft hinterlegt ist. Falls die auf das Anzeigeelement ausgeübte Kraft diesen Schwellenwert überschreitet, kann mit der Sensoreinrichtung ein entsprechendes Steuersignal ausgegeben werden. Infolge des Steuersignals kann beispielsweise ein Warnsignal ausgegeben werden. Hierbei ist es denkbar, dass ein akustisches, ein optisches und/oder ein haptisches Warnsignal an den Fahrer des Kraftfahrzeugs ausgegeben wird. Somit kann dieser darauf aufmerksam gemacht werden, dass er die Anzeigevorrichtung fehlerhaft bedient.

In einer weiteren Ausgestaltung ist die Sensoreinrichtung dazu ausgelegt, das Steuersignal an die Antriebseinrichtung zu übertragen und die Antriebseinrichtung ist dazu ausgelegt, die Spiegeleinrichtung nach einem Empfangen des Steuersignals von der Gebrauchsstellung in die Verstaustellung zu bewegen. Falls die auf das Anzeigeelement einwirkende Kraft den Schwellenwert überschreitet, kann das Anzeigeelement beziehungsweise der Combinerspiegel mittels der Antriebseinrichtung in die Verstaustellung bewegt werden. Somit kann eine Beschädigung des Anzeigeelements, der Antriebseinrichtung und/oder der Kinematik verhindert werden.

In einer weiteren Ausführungsform ist die Sensoreinrichtung dazu ausgelegt, eine auf das Anzeigeelement ausgeübte Kraft während der Bewegung der Spiegeleinrichtung von der Verstaustellung in die Gebrauchsstellung zu erfassen. Zudem kann die Sensoreinrichtung dazu ausgelegt sein, eine auf das Anzeigeelement ausgeübte Kraft während der Bewegung der Spiegeleinrichtung von der Gebrauchsstellung in die Verstaustellung zu erfassen. Somit kann beispielsweise erkannt werden, dass die Spiegeleinrichtung bei der Bewegung von der Verstaustellung in die Gebrauchsstellung klemmt. Zudem können Gegenstände, die auf der Anzeigevorrichtung abgelegt sind, verhindern, dass die Spiegeleinrichtung von der Verstaustellung in die Gebrauchsstellung bewegt werden kann. Ein solcher Zustand kann mit Hilfe der Sensoreinrichtung zuverlässig erfasst werden.

In einer Ausführungsform weist die Spiegeleinrichtung ein Halteelement zum Halten des Anzeigeelements auf und die Sensoreinrichtung ist zumindest bereichsweise in einem Zwischenraum zwischen dem Anzeigeelement und dem Halteelement angeordnet. Dabei kann die Sensoreinrichtung an dem Anzeigeelement angeordnet sein. Die Sensoreinrichtung kann auch an dem Halteelement angeordnet sein. Das Halteelement kann das Anzeigeelement zumindest bereichsweise umgeben. Somit kann mit der Sensoreinrichtung eine Kraft im Haltebereich des Halteelements erfasst werden. Durch den relativ großen Hebel, der von dem Anzeigeelement in Folge der Krafteinwirkung auf das Anzeigeelement erzeugt wird, können auf das Anzeigeelement ausgeübte Kräfte besonders zuverlässig erfasst werden.

In einer weiteren Ausgestaltung weist die Spiegeleinrichtung ein Prägeelement auf, welches mit der Antriebseinrichtung verbunden ist und welches mit dem Halteelement gekoppelt ist, wobei die Sensoreinrichtung zumindest bereichsweise in einem Zwischenraum zwischen dem Halteelement und dem Trägerelement angeordnet ist. Dabei ist insbesondere das Trägerelement fest mit der Antriebseinrichtung verbunden. Die Antriebseinrichtung kann beispielsweise als Spindelantrieb ausgebildet sein, wobei eine Spindel der Antriebseinrichtung mit dem Trägerelement mechanisch verbunden ist. Das Halteelement kann mit dem Anzeigeelement beziehungsweise dem Combinerspiegel mechanisch verbunden sein. Die Sensoreinrichtung kann an dem Halteelement und/oder dem Trägerelement angeordnet sein. Somit kann eine Krafteinwirkung auf das Anzeigeelement, welches mechanisch mit dem Halteelement gekoppelt ist, erfasst werden.

In einer weiteren Ausführungsform weist die Spiegeleinrichtung ein Federelement auf, wobei das Halteelement mittels des vorgespannten Federelements gegenüber dem Trägerelement gelagert ist. Zum Ausgleich von Bauteiltoleranzen und/oder Montagetoleranzen weist die Spiegeleinrichtung ein Federelement auf. Durch das Federelement kann jegliches Spiel in dem Mechanismus eliminiert und somit eine Geräuschentwicklung im Betrieb der Anzeigevorrichtung unterbunden werden. Mit Hilfe der Sensoreinrichtung kann zudem die von dem Federelement bereitgestellte Federspannung erfasst beziehungsweise abgeleitet werden.

In einer weiteren Ausgestaltung weist die Anzeigevorrichtung ein Gehäuse auf, wobei die Spiegeleinrichtung in der Verstaustellung innerhalb des Gehäuses und in der Gebrauchsstellung zumindest bereichsweise außerhalb des Gehäuses angeordnet ist. In der Gebrauchsstellung befindet sich die Spiegeleinrichtung innerhalb des Gehäuses der Anzeigevorrichtung. In der Gebrauchsstellung kann die Spiegeleinrichtung mit Hilfe der Antriebseinrichtung aus dem Gehäuse heraus bewegt werden, so dass das Anzeigeelement in der Gebrauchsstellung zumindest bereichsweise außerhalb des Gehäuses angeordnet ist. Zudem kann das Gehäuse ein Deckelelement aufweisen, welches sich in der Verstaustellung der Spiegeleinrichtung in einer Geschlossenstellung und in der Gebrauchsstellung der Spiegeleinrichtung in einer Offenstellung befindet. Mit dem Deckelelement kann das Gehäuse also verschlossen werden, wenn sich die Spiegeleinrichtung in der Verstaustellung befindet. Wenn die Spiegeleinrichtung von der Verstaustellung in die Gebrauchsstellung bewegt wird, kann das Deckelelement von der Geschlossenstellung in die Offenstellung bewegt werden. Das Deckelelement kann über eine entsprechende Kinematik mit der Antriebseinrichtung von der Geschlossenstellung in die Offenstellung und umgekehrt bewegt werden. Durch das Gehäuse ist die Spiegeleinrichtung und insbesondere das Anzeigeelement vor Verschmutzungen und äußeren Einflüssen geschützt.

In einer weiteren Ausführungsform weist die Spiegeleinrichtung ein Lageelement auf und das Gehäuseelement weist ein zu dem Lageelement korrespondierendes Gegenlagerelement auf, wobei das Lageelement in der Gebrauchsstellung der Spiegeleinrichtung drehbar zu dem Gegenlageelement gelagert ist. Beim Bewegen der Spiegeleinrichtung von der Verstaustellung in die Gebrauchsstellung läuft das Lagerelement der Spiegeleinrichtung auf das Gegenlagerelement des Gehäuses auf. Das Lagerelement der Spiegeleinrichtung und das korrespondierende Gegenlagerelement des Gehäuses bildet zusammen ein Drehlagerelement. Damit kann die Spiegeleinrichtung in der Gebrauchsstellung gedreht beziehungsweise verkippt werden. Somit kann die Spiegeleinrichtung bei der in dem Kraftfahrzeug angeordneten Anzeigevorrichtung auf eine Augenposition eines Fahrers des Kraftfahrzeugs eingestellt werden.

In einer weiteren Ausgestaltung ist die Antriebseinrichtung dazu ausgelegt, die Spiegeleinrichtung in der Gebrauchsstellung zu drehen. In der Gebrauchsstellung der Spiegeleinrichtung würde durch das Lagerelement und das korrespondierende Gegenlagerelement ein Drehlager bereitgestellt. Wenn die Spiegeleinrichtung nach Erreichen der Gebrauchsstellung mit der Antriebseinrichtung weiter bewegt wird, kann eine Drehbewegung der Spiegeleinrichtung relativ zu dem Gehäuse ermöglicht werden. Somit kann mit nur einer einzigen Antriebseinrichtung sowohl die Bewegung der Spiegeleinrichtung zwischen der Verstaustellung und der Gebrauchsstellung sowie die Drehung der Spiegeleinrichtung in der Gebrauchsstellung ermöglicht werden. Dabei können das Lagerelement, das Gegenlagerelement und/oder die Antriebseinrichtung derart ausgebildet sein, dass die Spiegeleinrichtung in der Gebrauchsstellung durch die Antriebseinrichtung im Uhrzeigersinn oder gegen den Uhrzeigersinn gedreht werden kann. Dies ermöglicht zwei unterschiedlich geneigte Ausfahrrichtungen für die Spiegeleinrichtung. Somit kann die Antriebseinrichtung durch die Ausgestaltung des Lagerelements, des Gegenlagerelements und/oder der Antriebseinrichtung an unterschiedliche Bauraumbedingung technisch und mechanisch angepasst werden.

Bevorzugt weist die Anzeigevorrichtung eine Bilderzeugungseinrichtung zum Abstrahlen von Licht und eine Optikeinrichtung zum Projizieren des von der Bilderzeugungseinrichtung abgestrahlten Lichts auf das Anzeigeelement auf. Die Bilderzeugungseinrichtung kann beispielsweise einen entsprechenden Bildschirm umfassen, mit dem ein Bild erzeugt werden kann. Die Optikeinrichtung kann eine oder mehrere Spiegel umfassen, mittels welchen das Licht auf das Anzeigeelement projiziert werden kann.

In einer weiteren Ausführungsform umfasst die Sensoreinrichtung einen piezoelektrischen Sensor, einen piezoresistiven Sensor, einen kapazitiven Sensor und/oder einen Dehnmessstreifen. Mit einem piezoelektrischen Sensor kann eine elektrische Spannung bereitgestellt werden, wenn auf diesen eine Kraft ausgeübt wird. Bei einem piezoresistiven Sensor ändert sich der elektrische Widerstand des Sensors in Abhängigkeit von der Kraft. Weiterhin kann die Sensoreinrichtung eine kapazitiven Sensor umfassen, der beispielsweise infolge einer Krafteinwirkung eine Kapazitätsänderung erfährt. Mit einem Dehnmessstreifen kann beispielsweise ein Zug und/oder ein Druck, der auf das Anzeigeelement beziehungsweise den Combinerspiegel ausgeübt wird, erfasst werden.

Ein erfindungsgemäßes Kraftfahrzeug umfasst eine erfindungsgemäße Anzeigevorrichtung. Die Anzeigevorrichtung ist insbesondere derart in oder an dem Kraftfahrzeug angeordnet, dass dem Fahrer des Kraftfahrzeugs mittels der Anzeigevorrichtung ein virtuelles Bild beziehungsweise eine virtuelle Anzeige bereitgestellt werden kann. Das Kraftfahrzeug ist insbesondere als Personenkraftwagen ausgebildet.

Ein erfindungsgemäßes Verfahren dient zum Betreiben einer Anzeigevorrichtung für ein Kraftfahrzeug. Hierbei wird eine Spiegeleinrichtung, welche ein Anzeigeelement mit einer semitransparenten Spiegelfläche aufweist, mittels einer Antriebseinrichtung zwischen einer Verstaustellung und einer Gebrauchsstellung bewegt. Zudem wird mittels einer Sensoreinrichtung der Spiegeleinrichtung in der Gebrauchsstellung der Spiegeleinrichtung eine auf das Anzeigeelement ausgeübte Kraft erfasst.

Die mit Bezug auf die erfindungsgemäße Anzeigevorrichtung vorgestellten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine ausschnittsweise Darstellung eines Kraftfahrzeugs, welches eine Anzeigevorrichtung gemäß einer Ausführungsform der vorliegenden Erfindung aufweist,
- Fig. 2: die Anzeigevorrichtung in einer weiteren Ausführungsform, wobei sich eine Spiegeleinrichtung der Anzeigevorrichtung in einer Verstaustellung befindet;
- Fig. 3: die Anzeigevorrichtung gemäß Fig. 2, wobei sich die Spiegeleinrichtung in einer Gebrauchsstellung befindet;
- Fig. 4: eine Detailansicht der Anzeigevorrichtung von Fig. 3;
- Fig. 5: eine vereinfachte Darstellung der Anzeigevorrichtung gemäß Fig. 4, wobei die Spiegeleinrichtung eine Sensoreinrichtung aufweist; und
- Fig. 6: eine vereinfachte Darstellung der Anzeigevorrichtung mit einer Sensoreinrichtung in einer weiteren Ausführungsform.

In den Figuren werden gleiche und funktionsgleiche Elemente mit den gleichen Bezugszeichen versehen.

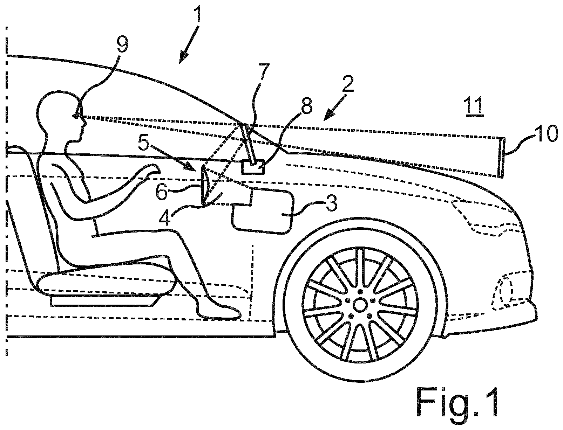

Fig. 1 zeigt eine ausschnittsweise Darstellung eines Kraftfahrzeugs 1 gemäß einer Ausführungsform der vorliegenden Erfindung. Das Kraftfahrzeug ist in dem vorliegenden Ausführungsbeispiel als Personenkraftwagen ausgebildet. Das Kraftfahrzeug 1 umfasst eine Anzeigevorrichtung 1. Die Anzeigevorrichtung 2 ist in dem vorliegenden Ausführungsbeispiel als Kopf-oben-Anzeigevorrichtung beziehungsweise als Head-up Display ausgebildet.

Die Anzeigevorrichtung 2 umfasst eine Bilderzeugungseinrichtung 3. Mittels der Bilderzeugungseinrichtung 3 kann Licht abgestrahlt werden. Insbesondere kann mit der Bilderzeugungseinrichtung 3 ein Bild bereitgestellt werden. Die Bilderzeugungseinrichtung 3 kann beispielsweise einen entsprechenden Bildschirm aufweisen, mit dem das Bild bereitgestellt werden kann beziehungsweise mit dem das Licht 4 abgestrahlt werden kann. Darüber hinaus umfasst die Anzeigevorrichtung 2 eine Optikeinrichtung 5. Die Optikeinrichtung 5 umfasst vorliegend einen Spiegel 6. Das von der Bilderzeugungseinrichtung 3 abgestrahlte Licht 4 trifft zunächst auf den Spiegel 6 und anschließend auf ein Anzeigeelement 7. Die Bilderzeugungseinrichtung 3 und die Optikeinrichtung 5 sind vorliegend innerhalb eines Armaturenbretts des Kraftfahrzeugs 1 angeordnet.

Das Anzeigeelement 7 kann auch als Combinerspiegel, Combinerscheibe oder als Combiner bezeichnet werden. Das Anzeigeelement 7 weist eine Spiegelfläche auf und ist semitransparent ausgebildet. Das Anzeigeelement 7 ist aus einem Glas oder aus einem Kunststoff gebildet. Das Licht 4, das von der Bilderzeugungseinrichtung 3 abgestrahlt wird, wird mittels der Optikeinrichtung 5 auf das Anzeigeelement 7 projiziert. Ferner wird das Licht 4, das auf das Anzeigeelement 7 projiziert wird, zu den Augen 9 eines Fahrers des Kraftfahrzeugs 1 reflektiert. Somit überlagert sich diese Anzeige mit dem Licht, das von einem Umgebungsbereich 11 des Kraftfahrzeugs 1 zu den Augen 9 des Fahrers gelangt, mit dem Licht, das auf das Anzeigeelement 7 projiziert wird. Für den Fahrer des Kraftfahrzeugs 1 ergibt sich somit eine virtuelle Anzeige 10 beziehungsweise ein virtuelles Bild.

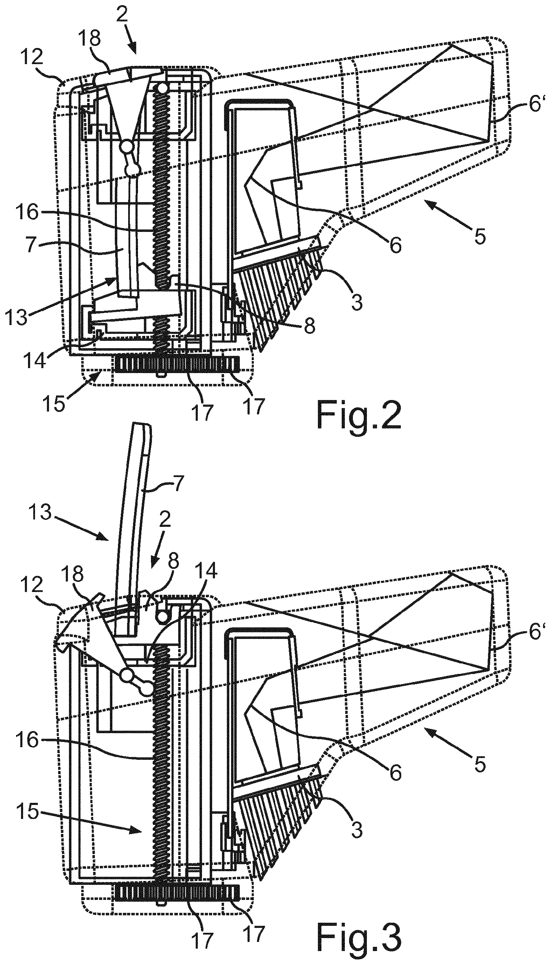

Fig. 2 zeigt die Anzeigevorrichtung 2 in einer weiteren Ausführungsform. Die Anzeigevorrichtung 2 umfasst ein Gehäuse 12, das beispielsweise aus Kunststoff gefertigt sein kann. In dem vorliegenden Ausführungsbeispiel umfasst die Optikeinrichtung 5 einen ersten Spiegel 6 und einen zweiten Spiegel 6'. Mit dem ersten Spiegel 6 kann das von der Bilderzeugungseinrichtung 3 abgestrahlte Licht 4 gefaltet werden und mit dem zweiten Spiegel 6' kann das Licht 4 auf das Anzeigeelement 7 projiziert werden, falls sich das Anzeigeelement 7 beziehungsweise eine Spiegeleinrichtung 13 in einer Gebrauchsstellung befindet.

Vorliegend ist das Anzeigeelement 7 Teil einer Spiegeleinrichtung 13. Die Spiegeleinrichtung 13 umfasst ferner ein Halteelement 8 zum Halten des Anzeigeelements 7 beziehungsweise des Combinerspiegels. Ferner umfasst die Spiegeleinrichtung 13 ein Trägerelement 14, welches mit dem Halteelement 8 mechanisch verbunden ist. Das Trägerelement 14 ist mit einer Antriebseinrichtung 15 mechanisch verbunden. Die Antriebseinrichtung 15 ist vorliegend als Spindelantrieb ausgebildet. Dabei ist das Trägerelement 14 mit einer Spindel 16 mechanisch verbunden. Die Spindel 16 kann über entsprechende Zahnräder 17 mit einem hier nicht dargestellten Motor angetrieben werden.

Fig. 2 zeigt die Anzeigevorrichtung 2, bei welcher sich die Spiegeleinrichtung 13 in der Verstaustellung befindet. Mithilfe der Antriebseinrichtung 15 kann die Spiegeleinrichtung 13 von der Verstaustellung in die Gebrauchsstellung bewegt werden. Fig. 3 zeigt die Anzeigevorrichtung 2, bei welcher sich die Spiegeleinrichtung 13 in der Gebrauchsstellung befindet. In der Verstaustellung befindet sich das Anzeigeelement 7 innerhalb des Gehäuses 12. In der Gebrauchsstellung befindet sich das Anzeigeelement 7 außerhalb des Gehäuses 12. Die Spiegeleinrichtung 13 wird bei der Bewegung von der Verstaustellung in die Gebrauchsstellung translatorisch mithilfe der Antriebseinrichtung 15 bewegt. Weiterhin weist das Gehäuse 12 ein Deckelelement 18 auf, welches sich in einer Geschlossenstellung befindet, falls sich die Spiegeleinrichtung 13 in der Verstaustellung befindet. Das Deckelelement 18 wird in einer Offenstellung bewegt, falls die Spiegeleinrichtung 13 von der Verstaustellung in die Gebrauchsstellung bewegt wird.

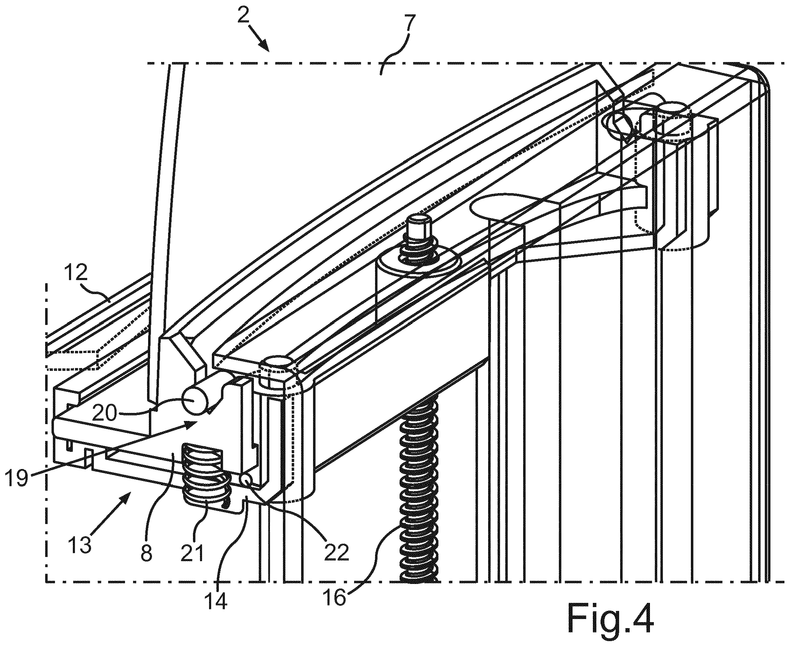

Fig. 4 zeigt eine Detailansicht der Anzeigevorrichtung 2, wobei sich die Spiegeleinrichtung 13 in der Gebrauchsstellung befindet. Hier ist zu erkennen, dass die Spiegeleinrichtung 13 ein Lagerelement 19 aufweist. Das Lagerelement 19 ist vorliegend als Ausnehmung innerhalb des Halteelements 8 ausgebildet. Ferner weist das Gehäuse 12 ein zu dem Lagerelement 19 korrespondierendes Gegenlagerelement 20 auf. Das Gegenlagerelement 20 ist vorliegend als Lagerbolzen ausgebildet, der ortsfest an dem Gehäuse 12 angeordnet ist. Wenn die Spiegeleinrichtung 13 mittels der Antriebseinrichtung 15 von der Verstaustellung in die Gebrauchsstellung bewegt wird, trifft das Lagerelement 19 auf das Gegenlagerelement 20. Dies bewirkt, dass der Lagerzapfen zumindest bereichsweise der Ausnehmung angeordnet ist. Das Lagerelement 19 und das Gegenlagerelement 20 bilden zusammen ein Drehlager. Somit kann das Anzeigeelement 7 in der Gebrauchsstellung der Spiegeleinrichtung 13 gedreht werden beziehungsweise rotatorisch bewegt werden. Wenn nach Erreichen der Gebrauchsstellung der Spiegeleinrichtung 13 weiterhin eine Kraft mittels der Antriebseinrichtung 15 auf die Spiegeleinrichtung 13 ausgeübt wird, wird die Spiegeleinrichtung 13 verdreht. Somit kann beispielsweise das Anzeigeelement 7 an die Position der Augen 9 des Fahrers eingestellt werden.

Weiterhin weist die Spiegeleinrichtung 13 ein Federelement 21 auf. Das Federelement 21 ist zwischen dem Halteelement 8 und dem Trägerelement 14 angeordnet. Somit kann einerseits erreicht werden, dass eine translatorische Verschiebung des Trägerelements 14 mittels der Antriebseinrichtung 15 zu einer rotatorischen Bewegung des Anzeigeelements 7 beziehungsweise des Combinerspiegels führt. Über das Federelement 21 werden das Halteelement 8 und das Trägerelement 14 zueinander vorgespannt. Somit kann ein Spiel zwischen dem Trägerelement 14 und dem Halteelement 8 eliminiert werden. Damit können Klappergeräusche während des Betriebs des Kraftfahrzeugs 1 unterbunden werden.

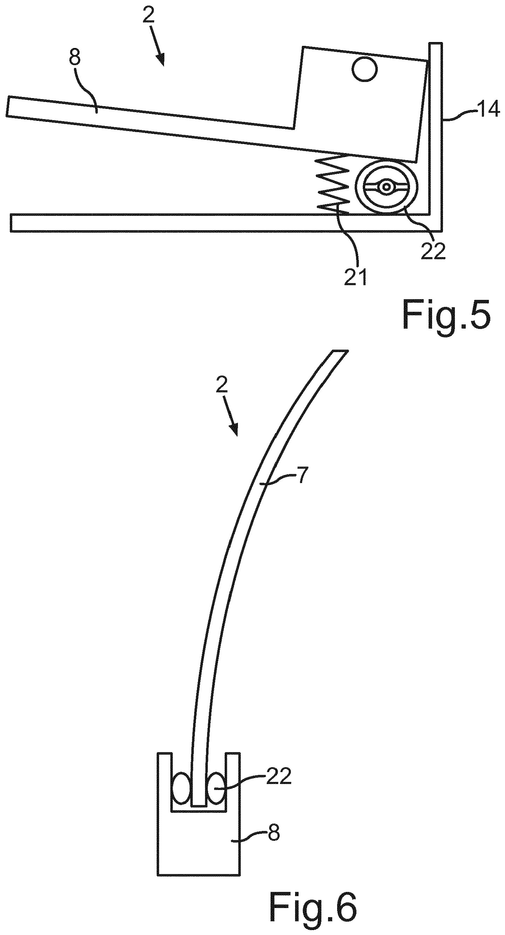

Fig. 5 zeigt eine ausschnittsweise Darstellung der Anzeigevorrichtung 2, wobei das Halteelement 8 und das Trägerelement 14 gezeigt ist. Ferner ist das zwischen dem Halteelement 8 und dem Trägerelement 14 angeordnete Federelement 21 zu erkennen. In dem vorliegenden Ausführungsbeispiel ist zudem zwischen dem Halteelement 8 und dem Trägerelement 14 eine Sensoreinrichtung 22 angeordnet. Die Sensoreinrichtung 22 ist insbesondere als Kraftsensor ausgebildet. Die Sensoreinrichtung 22 kann beispielsweise als piezoelektrischer Sensor, als piezoresistiver Sensor, als kapazitiver Sensor oder als Dehnmessstreifen ausgebildet sein.

Wenn auf das Anzeigeelement 7 eine Kraft ausgeübt wird, wird diese von dem Anzeigeelement 7 auf das Halteelement 8 übertragen. Somit wird das Halteelement 8 relativ zu dem Trägerelement 14 bewegt. Dies hat zur Folge, dass eine Kraft auf die Sensoreinrichtung 22 ausgeübt wird. Diese Kraft kann mit der Sensoreinrichtung 22 erfasst werden. Sobald die Kraft einen vorbestimmten Schwellenwert überschreitet, kann mit der Sensoreinrichtung 22 ein Steuersignal ausgegeben werden und an die Antriebseinrichtung 15 übertragen werden. Somit kann beispielsweise bewirkt werden, dass die Spiegeleinrichtung 13 mittels der Antriebseinrichtung 15 von der Gebrauchsstellung in die Verstaustellung bewegt wird.

Das Federelement 21 dient vorliegend Vorspann- und Verstellelement, um das Halteelement 8, an den das Anzeigeelement 7 angeordnet ist, relativ zum Trägerelement 14 zu verschieben. Wenn sich beispielsweise die Spiegeleinrichtung 13 in der Gebrauchsstellung befindet und die Spiegeleinrichtung 13 so gedreht ist, dass sie auf der Position der Augen 9 des Fahrers eingestellt ist, ist der Abstand zwischen dem Halteelement 8 und dem Trägerelement 14 durch die Federspannung des Federelements 21 festgelegt. Die elektrische Spannung beziehungsweise ein Widerstandswert, der von der Sensoreinrichtung 22 in dieser Referenzposition ausgegeben wird, kann als Referenzspannung beziehungsweise als Referenzwiderstand genutzt werden. Wenn nun ein Druck auf das Anzeigeelement 7 ausgeübt wird, ändert sich die elektrische Spannung und/oder der Widerstand an der Sensoreinrichtung 22.

Weiterhin kann die Sensoreinrichtung 22 dazu genutzt werden, eine Störung der Bewegung der Spiegeleinrichtung 13 bei der Bewegung von der Verstaustellung in die Gebrauchsstellung und umgekehrt zu erfassen. Somit kann beispielsweise erkannt werden, ob die Kraft, die auf die Sensoreinrichtung 22 ausgeübt wird, während der Bewegung von der Verstaustellung in die Gebrauchsstellung konstant ist. Falls sich die Kraft während der Bewegung erhöht, kann davon ausgegangen werden, dass ein Fehler vorliegt. Dies ist beispielsweise der Fall, wenn die Gebrauchsstellung nicht erreicht wird und bei einem Klemmen und/oder Blockieren der Spiegeleinrichtung 13 somit eine Krafterhöhung vorliegt.

Fig. 6 zeigt eine ausschnittsweise Darstellung der Antriebsvorrichtung 2 in einer weiteren Ausführungsform. Hier ist die Sensoreinrichtung 22 in einen Zwischenraum zwischen dem Halteelement 8 und dem Anzeigeelement 7 angeordnet. Die Sensoreinrichtung 22 ist damit direkt in die Halterung für das Anzeigeelement 7 beziehungsweise den Combinerspiegel angebracht. Durch den relativ großen Hebel, welche das Anzeigeelement 7 im Verhältnis zu dem Haltebereich des Halteelements 7 aufweist, können Kräfte, die auf das Anzeigeelement wirken zuverlässig erfasst werden.

## Patentansprüche

1. Anzeigevorrichtung (2) für ein Kraftfahrzeug (1), mit einer Spiegeleinrichtung (13), welche ein Anzeigeelement (7) mit einer semitransparenten Spiegelfläche aufweist, und mit einer Antriebseinrichtung (15), mittels welcher die Spiegeleinrichtung (13) zwischen einer Verstaustellung und einer Gebrauchsstellung bewegbar ist,
**dadurch gekennzeichnet, dass**
die Spiegeleinrichtung (13) eine Sensoreinrichtung (22) aufweist, welche dazu ausgelegt ist, in der Gebrauchsstellung der Spiegeleinrichtung (13) eine auf das Anzeigeelement (7) ausgeübte Kraft zu erfassen.

2. Anzeigevorrichtung (2) nach Anspruch 1,
**dadurch gekennzeichnet, dass**
die Sensoreinrichtung (22) dazu ausgelegt ist, ein Steuersignal auszugeben, falls die erfasste Kraft einen vorbestimmten Schwellenwert überschreitet.

3. Anzeigevorrichtung (2) nach Anspruch 2,
**dadurch gekennzeichnet, dass**
die Sensoreinrichtung (22) dazu ausgelegt ist, das Steuersignal an die Antriebseinrichtung (15) zu übertragen, und die Antriebseinrichtung dazu ausgelegt ist, die Spiegeleinrichtung (13) nach einem Empfangen des Steuersignals von der Gebrauchsstellung in die Verstaustellung zu bewegen.

4. Anzeigevorrichtung (2) nach einem der vorhergehenden Ansprüche,
**dadurch gekennzeichnet, dass**
die Sensoreinrichtung (22) dazu ausgelegt ist, eine auf das Anzeigelement (7) ausgeübte Kraft während der Bewegung der Spiegeleinrichtung (13) von der Verstaustellung in die Gebrauchsstellung zu erfassen.

5. Anzeigevorrichtung (2) nach einem der vorhergehenden Ansprüche,
**dadurch gekennzeichnet, dass**
die Spiegeleinrichtung (13) ein Halteelement (8) zum Halten des Anzeigeelements (7) aufweist und die Sensoreinrichtung (22) zumindest bereichsweise in einem Zwischenraum zwischen dem Anzeigeelement (7) und dem Halteelement (8) angeordnet ist.

6. Anzeigevorrichtung (2) nach einem der vorhergehenden Ansprüche,
**dadurch gekennzeichnet, dass**
die Spiegeleinrichtung (13) ein Trägerelement (14) aufweist, welches mit der Antriebseinrichtung (15) verbunden ist und welches mit dem Halteelement (8) verbunden ist, wobei die Sensoreinrichtung (22) zumindest bereichsweise in einem Zwischenraum zwischen dem Halteelement (8) und dem Trägerelement (14) angeordnet ist.

7. Anzeigevorrichtung (2) nach Anspruch 6,
**dadurch gekennzeichnet, dass**
die Spiegeleinrichtung (13) ein Federelement (21) aufweist, wobei das Haltelement (8) mittels des vorgespannten Federelements (21) zu dem Trägerelement (14) gelagert ist.

8. Anzeigevorrichtung (2) nach einem der vorhergehenden Ansprüche,
**dadurch gekennzeichnet, dass**
die Anzeigevorrichtung (2) ein Gehäuse (12) aufweist, wobei die Spiegeleinrichtung (13) in der Verstaustellung innerhalb des Gehäuses (12) und in der Gebrauchsstellung zumindest bereichsweise außerhalb des Gehäuses (12) angeordnet ist.

9. Anzeigevorrichtung (2) nach Anspruch 8,
**dadurch gekennzeichnet, dass**
die Spiegeleinrichtung (13) ein Lagerelement (19) aufweist und das Gehäuse (12) ein zu dem Lagerelement (19) korrespondierendes Gegenlagerelement (20) aufweist, wobei das Lagerelement (19) in der Gebrauchsstellung der Spiegeleinrichtung (13) drehbar zu dem Gegenlagerelement (20) gelagert ist.

10. Anzeigevorrichtung (2) nach einem der vorhergehenden Ansprüche,
**dadurch gekennzeichnet, dass**
die Antriebseinrichtung (15) dazu ausgelegt ist, die Spiegeleinrichtung (13) in der Gebrauchsstellung zu drehen.

11. Anzeigevorrichtung (2) nach einem der vorhergehenden Ansprüche,
**dadurch gekennzeichnet, dass**
die Anzeigevorrichtung (2) eine Bilderzeugungseinrichtung (3) zum Abstrahlen von Licht (4) und eine Optikeinrichtung (5) zum Projizieren des von der Bilderzeugungseinrichtung (3) abgestrahlten Lichts (4) auf das Anzeigeelement (7) aufweist.

12. Anzeigevorrichtung (2) nach einem der vorhergehenden Ansprüche,
**dadurch gekennzeichnet, dass**
die Sensoreinrichtung (22) einen piezoelektrischen Sensor, einen piezoresistiven Sensor, einen kapazitiven Sensor und/oder einen Dehnmessstreifen umfasst.

13. Kraftfahrzeug (1) mit einer Anzeigevorrichtung (2) nach einem der vorhergehenden Ansprüche.

14. Verfahren zum Betreiben einer Anzeigevorrichtung (2) für ein Kraftfahrzeug (1), bei welchem eine Spiegeleinrichtung (13), welche ein Anzeigeelement (7) mit einer semitransparenten Spiegelfläche aufweist, mittels einer Antriebseinrichtung (15) zwischen einer Verstaustellung und einer Gebrauchsstellung bewegt wird,
**dadurch gekennzeichnet, dass**
mittels einer Sensoreinrichtung (22) der Spiegeleinrichtung (13) in der Gebrauchsstellung der Spiegeleinrichtung (13) eine auf das Anzeigeelement (7) ausgeübte Kraft erfasst wird.

## Claims

1. Display device (2) for a motor vehicle (1) having a mirror apparatus (13) which has a display element (7) with a semi-transparent mirror surface, and having a drive apparatus (15) by means of which the mirror apparatus (13) can be moved between a storage position and a position of use,
**characterized in that**
the mirror apparatus (13) has a sensor apparatus (22) which is configured to detect, in the position of use of the mirror apparatus (13), a force applied to the display element (7).

2. Display device (2) according to Claim 1,
**characterized in that**
the sensor apparatus (22) is configured to output a control signal if the detected force exceeds a predetermined threshold value.

3. Display device (2) according to Claim 2,
**characterized in that**
the sensor apparatus (22) is configured to transmit the control signal to the drive apparatus (15), and the drive apparatus is configured to move the mirror apparatus (13) from the position of use into the storage position after reception of the control signal.

4. Display device (2) according to one of the preceding claims,
**characterized in that**
the sensor apparatus (22) is configured to detect a force applied to the display element (7) during the movement of the mirror apparatus (13) from the storage position into the position of use.

5. Display device (2) according to one of the preceding claims,
**characterized in that**
the mirror apparatus (13) has a holding element (8) for holding the display element (7), and the sensor apparatus (22) is arranged at least partially in an intermediate space between the display element (7) and the holding element (8).

6. Display device (2) according to one of the preceding claims,
**characterized in that**
the mirror apparatus (13) has a carrier element (14) which is connected to the drive apparatus (15) and which is connected to the holding element (8), wherein the sensor apparatus (22) is arranged at least partially in an intermediate space between the holding element (8) and the carrier element (14).

7. Display device (2) according to Claim 6,
**characterized in that**
the mirror apparatus (13) has a spring element (21), wherein the holding element (8) is mounted with respect to the carrier element (14) by means of the prestressed spring element (21).

8. Display device (2) according to one of the preceding claims,
**characterized in that**
the display device (2) has a housing (12), wherein in the storage position the mirror apparatus (13) is arranged inside the housing (12), and in the position of use it is arranged at least partially outside the housing (12).

9. Display device (2) according to Claim 8,
**characterized in that**
the mirror apparatus (13) has a bearing element (19) and the housing (12) has a counter bearing element (20) which corresponds to the bearing element (19), wherein in the position of use of the mirror apparatus (13) the bearing element (19) is mounted rotatably with respect to the counter bearing element (20).

10. Display device (2) according to one of the preceding claims,
**characterized in that**
the drive apparatus (15) is configured to rotate the mirror apparatus (13) in the position of use.

11. Display device (2) according to one of the preceding claims,
**characterized in that**
the display device (2) has an image-generating apparatus (3) for emitting light (4) and an optical apparatus (5) for projecting the light (4) emitted by the image-generating apparatus (3) onto the display element (7).

12. Display device (12) according to one of the preceding claims,
**characterized in that**
the sensor apparatus (22) comprises a piezoelectric sensor, a piezoresistive sensor, a capacitive sensor and/or a strain gauge.

13. Motor vehicle (1) having a display device (2) according to one of the preceding claims.

14. Method for operating a display device (2) for a motor vehicle (1), in which a mirror apparatus (13), which has a display element (7) with a semi-transparent mirror surface, is moved between a storage position and a position of use by means of a drive apparatus (15),
**characterized in that**
in the position of use of the mirror apparatus (13) a force applied to the display element (7) is detected by means of a sensor apparatus (22).

## Revendications

1. Arrangement d'affichage (2) pour un véhicule automobile (1), comprenant un dispositif à miroir (13) qui possède un élément d'affichage (7) doté d'une surface réfléchissante semi-transparente, et comprenant un dispositif d'entraînement (15) au moyen duquel le dispositif à miroir (13) peut être déplacé entre une position d'arrimage et une position d'utilisation,
**caractérisé en ce que** le dispositif à miroir (13) possède un dispositif de détection (22) qui est conçu pour, dans la position d'utilisation du dispositif à miroir (13), détecter une force exercée sur l'élément d'affichage (7).

2. Arrangement d'affichage (2) selon la revendication 1, **caractérisé en ce que** le dispositif de détection (22) est conçu pour délivrer un signal de commande dans le cas où la force détectée dépasse une valeur de seuil prédéfinie.

3. Arrangement d'affichage (2) selon la revendication 2, **caractérisé en ce que** le dispositif de détection (22) est conçu pour transmettre le signal de commande au dispositif d'entraînement (15) et le dispositif d'entraînement est conçu pour, après une réception du signal de commande, déplacer le dispositif à miroir (13) de la position d'utilisation à la position d'arrimage.

4. Arrangement d'affichage (2) selon l'une des revendications précédentes, **caractérisé en ce que** le dispositif de détection (22) est conçu pour détecter une force exercée sur l'élément d'affichage (7) pendant le mouvement du dispositif à miroir (13) de la position d'arrimage à la position d'utilisation.

5. Arrangement d'affichage (2) selon l'une des revendications précédentes, **caractérisé en ce que** le dispositif à miroir (13) possède un élément de maintien (8) destiné à maintenir l'élément d'affichage (7) et le dispositif de détection (22) est disposé, au moins par endroits, dans un espace intermédiaire entre l'élément d'affichage (7) et l'élément de maintien (8).

6. Arrangement d'affichage (2) selon l'une des revendications précédentes, **caractérisé en ce que** le dispositif à miroir (13) possède un élément porteur (14) qui est relié au dispositif d'entraînement (15) et qui est relié à l'élément de maintien (8), le dispositif de détection (22) étant disposé, au moins par endroits, dans un espace intermédiaire entre l'élément de maintien (8) et l'élément porteur (14).

7. Arrangement d'affichage (2) selon la revendication 6, **caractérisé en ce que** le dispositif à miroir (13) possède un élément ressort (21), l'élément de maintien (8) étant supporté par rapport à l'élément porteur (14) au moyen de l'élément ressort (21) précontraint.

8. Arrangement d'affichage (2) selon l'une des revendications précédentes, **caractérisé en ce que** l'arrangement d'affichage (2) possède un boîtier (12), le dispositif à miroir (13) en position d'arrimage étant disposé à l'intérieur du boîtier (12) et en position d'utilisation au moins par endroits en-dehors du boîtier (12) .

9. Arrangement d'affichage (2) selon la revendication 8, **caractérisé en ce que** le dispositif à miroir (13) possède un élément formant palier (19) et le boîtier (12) possède un élément formant palier homologue (20) correspondant à l'élément formant palier (19), l'élément formant palier (19), dans la position d'utilisation du dispositif à miroir (13), étant supporté de façon rotative par rapport à l'élément formant palier homologue (20).

10. Arrangement d'affichage (2) selon l'une des revendications précédentes, **caractérisé en ce que** le dispositif d'entraînement (15) est conçu pour faire tourner le dispositif à miroir (13) dans la position d'utilisation.

11. Arrangement d'affichage (2) selon l'une des revendications précédentes, **caractérisé en ce que** l'arrangement d'affichage (2) possède un dispositif de génération d'image (3) destiné à émettre de la lumière (4) et un dispositif optique (5) destiné à projeter la lumière (4) émise par le dispositif de génération d'image (3) sur l'élément d'affichage (7).

12. Arrangement d'affichage (2) selon l'une des revendications précédentes, **caractérisé en ce que** le dispositif de détection (22) comporte un capteur piézoélectrique, un capteur piézorésistif, un capteur capacitif et/ou une jauge d'allongement.

13. Véhicule automobile (1) équipé d'un arrangement d'affichage (2) selon l'une des revendications précédentes.

14. Procédé pour faire fonctionner un arrangement d'affichage (2) pour un véhicule automobile (1), selon lequel un dispositif à miroir (13), qui possède un élément d'affichage (7) doté d'une surface réfléchissante semi-transparente, est déplacé au moyen d'un dispositif d'entraînement (15) entre une position d'arrimage et une position d'utilisation, **caractérisé en ce que**
une force exercée sur l'élément d'affichage (7) est détectée au moyen d'un dispositif de détection (22) du dispositif à miroir (13) dans la position d'utilisation du dispositif à miroir (13).
